# EUROPÄISCHE PATENTSCHRIFT

(11) **EP 1 583 196 B1**
(45) Veröffentlichungstag und Bekanntmachung des Hinweises auf die Patenterteilung: **04.04.2007**
(21) Anmeldenummer: 04007761.2
(22) Anmeldetag: 31.03.2004
(51) Int. Cl.: H02G 15/04, H02G 15/18

(54) **Dauerelastische Mehrfinger-Aufteilkappe für die Montage eines Kabelendverschlusses**
Permanently elastic multi-finger divider sleeve for mounting a cable termination
Manchon séparateur multidoigt à élasticité permanente pour le montage d'une terminaison de câble

(43) Veröffentlichungstag der Anmeldung: 05.10.2005
(73) Patentinhaber: CELLPACK GMBH, D-79761 Waldshut-Tiengen (DE)
(72) Erfinder: Haim, Klaus-Dieter, Dr.-Ing., 02763 Hörnitz (DE); Pilling, Jürgen, Prof. Dr.-Ing. habil., 02794 Spitzkunnersdorf (DE)
(74) Vertreter: Heyner, Klaus

(56) Entgegenhaltungen:
- EP-A- 0 767 523
- EP-A- 0 933 856
- EP-A- 0 963 022

## Beschreibung

Die Erfindung betrifft den Aufbau einer montagegerechten und montagefreundlichen, dauerelastischen Mehrfinger-Aufteilkappe.

Mehradrige Kabel der elektrischen Energietechnik besitzen einen gemeinsamen Kabelmantel, der zur Montage eines Endverschlusses am Ende des Kabels entfernt wird, so dass die Isolierungen der Adern frei zugänglich sind.

Endverschlüsse für mehradrige Energiekabel, die mit Nieder- oder Mittelspannung betrieben werden, bestehen aus Endverschlüssen für die einzelnen Adern und aus einer Aufteilkappe. Diese Kappe besitzt zylindrische Öffnungen, die sogenannten Finger, für die einzelnen Adern, um diese wasserdicht zu umhüllen und umschließt den Kabelmantel mit ihrem Schaft, um auch diesen wasserdicht zu umhüllen

Zur Montage wird der Kabelmantel in einer solchen Länge entfernt, dass die Adern ausreichend weit gespreizt werden können, um zwischen den Enden mit den Kabelschuhen den erforderlichen Abstand zu erhalten. Beim Aufschieben der Aufteilkappe müssen die frei liegenden Adern zunächst in den zylindrischen Teil der Aufteilkappe, den Schaft, eingeführt werden. Dann werden sie innen einzeln in die Öffnungen der zur Aufteilkappe gehörenden Finger eingeführt. Erst dann kann die Kappe über das Ende des Kabelmantels geschoben werden.
Heute werden dafür praktisch ausschließlich warmschrumpfende oder dauerelastische Formteile eingesetzt.

Warmschrumpfende Kappen wurden von der Firma Raychem (heute Tyco) in den Markt eingeführt und werden mittlerweile von vielen anderen Herstellern angeboten. Schaft und Finger der Aufteilkappe sind im Anlieferungszustand soweit gespreizt, dass die Adern praktisch ohne Reibung eingeführt und die Kappe bis zur Endposition geschoben werden kann. Die Innenoberflächen des Schaftes und der Finger sind mit Schmelzkleber beschichtet. In der Endposition wird die Kappe in der Regel mit einer offenen Flamme erwärmt, so dass sie auf den Kabelmantel und auf die Aderoberfläche fest aufschrumpft und damit den Zwickelbereich wasserdicht umhüllt.

Nachteilig ist bei dieser Lösung das komplizierte Herstellungsverfahren des Formteiles, bestehend aus Spritzgießen des Formteiles, Aufweiten im erwärmten Zustand, Abkühlen und Innenbeschichten, sowie die erforderliche offene Flamme bei der Montage.

Daher werden seit einigen Jahren zunehmend dauerelastische Kappen eingesetzt (Fa. 3M und andere), die vorwiegend aus kriechstromfesten Silikon in Spritzgießtechnik hergestellt werden. Zum Zweck der Montage werden beim Hersteller der Schaft und in die Finger aufgeweitet und auf so genannte Stützwendeln aufgesetzt. Der Innendurchmesser der Stützen ist dabei wie bei der Warmschrumpfkappe so gewählt, dass die Kappe mit genügend innerem Freiraum in die Endposition geschoben werden kann. In der Endposition werden die Stützwendeln entfernt, so dass der Schaft und die Finger auf die jeweilige Unterlage aufschrumpfen

Nachteilig sind bei dieser Lösung das aufwendige Herstellen der Stützwendeln und das umständliche Entfernen derselben bei der Montage. Außerdem ist es schwierig, die relativ steifen Adern am Deckel des Schaftes von innen in die Öffnungen der Stützwendeln in den Fingern der Aufteilkappe einzuführen. Außerdem kann das Band der aus thermoplastischem Kunststoff bestehenden Wendel - besonders bei niedrigen Temperaturen - reißen, bevor die Stützvorrichtung vollständig entfernt wurde. Das kann dazu führen, dass das Entfernen nicht mehr fortgesetzt werden kann und die gesamte Aufteilkappe aufgeschnitten und demontiert werden muss.

Aus EP 0631 357 B1 ist im Zusammenhang mit dem Einschieben eines rohrförmigen Teils in eine schrumpfbare elastische Hülle der Einsatz einer Haut mit geringem Reibungskoeffizienten bekannt. Diese Haut unterstützt den Gleitvorgang der ineinander zu schiebenden Teile beim Montieren einer elastischen schrumpfbaren Hülse.
In FR 2 592 825 wird für die richtige Positionierung bei der Muffenmontage der Einsatz einer Gleitfolie beschrieben. Die Folie ist an einem Rohr befestigt, mit dem man sie aus dem Spalt zwischen der elastischen Hülle und der Unterlage herausziehen kann.

Gegenstand von EP 0 933 856 A1 ist eine kaltschrumpfbare Dichtungsmuffe für elektrische Kabel. Vor der Montage der Muffe auf dem Kabel wird ihr erstes Ende auf ein steifes ringförmiges Stützelement zurückgebogen. Der Durchmesser dieses Stützelements ist ein wenig größer als der Kabeldurchmesser, um die Montage der Muffe auf dem Kabel zu erleichtern. Am anderen Ende der Muffe befinden sich mehrere Öffnungen für den Durchgang der Leiterdrähte, wobei jede Öffnung mit einer rohrförmigen Stützhülse versehen ist, um die Öffnungen für den Durchgang der Leiterdrähte offen zu halten. Stützelement und Stützhülsen werden nach der Montage der Muffe zurückgezogen.
Dieses Dokument wird als nächstliegender Stand der Technik angesehen.

Aufgabe der Erfindung ist es, den Aufbau einer dauerelastischen Aufteilkappe mit drei oder mehr Fingern so zu verändern, dass die Montage des Kabelendverschlusses vereinfacht wird und der Grad der Dehnung geringer ist.

Eine erfindungsgemäße Lösung dieser Aufgabe ist im Patentanspruch 1 angegeben. Weiterbildungen der Erfindung sind in den Unteransprüchen gekennzeichnet.

Nach der Konzeption der Erfindung wird in jeden Finger der dauerelastischen, aus kriechstromfestem Silikon in Spritzgießtechnik hergestellten Aufteilkappe im gedehnten Zustand eine rohrförmige Stützhülse eingeführt und der Schaft der Aufteilkappe wird beim Hersteller über das durch die Stützhülsen stabilisierte Fingerteil der Aufteilkappe gestülpt, so dass die Eingangsöffnungen der Finger der Aufteilkappe für das Einführen der Adern frei zugänglich werden. Die Länge der Stützhülsen wird so gewählt, dass der umgestülpte Schaft vollständig durch das Bündel der drei oder mehr in die Finger eingeführten Stützhülsen abgestützt wird.
Zwischen dem umgestülpten Schaft und der Außenoberfläche der Finger mit eingesetzten Stützhülsen wird eine Folie in zwei Lagen angeordnet. Die Innenoberfläche der Finger ist mit einem geeigneten Gleitmittel versehen, das die erforderliche Langzeitbeständigkeit aufweist.

Zur Montage wird die so vorgefertigte Aufteilkappe einfach auf die Adern aufgeschoben. Dabei liegen die Öffnungen der Stützhülsen frei, so dass das Einführen der Adern besonders einfach ist. Die Innenoberfläche der Stützhülsen ist glatt. Eine Behinderung beim Aufschieben ist damit ausgeschlossen. Nach Erreichen der Endposition wird der umgestülpte Schaft von Hand über den Kabelmantel geschoben (zurückgestülpt). Die Folien erleichtern diesen Vorgang und liegen anschließend frei. Sie sind daher einfach zu beseitigen. Anschließend werden die Stützhülsen von Hand aus den Fingern und dann von den Adern gezogen.

Ein entscheidender Vorteil dieser Lösung ist, dass keine gesonderte Stützvorrichtung für den Schaft benötigt wird. Diese Funktion wird von den Stützhülsen der Finger mit übernommen. Damit ist auch ein größerer Durchmesser im Bereich des Kabelmantels zulässig, der sonst durch die Stützhülse im Schaft begrenzt würde.
Ein weiterer Vorteil ist der geringere Grad der Dehnung im vormontierten Zustand. Die aus dem Stand der Technik bekannten Stützwendeln müssen innen so groß sein, dass das Band im Zwischenraum zwischen Innenoberfläche der Stütze und der Oberfläche des Kabelmantels herausgezogen werden kann.

Weitere Einzelheiten, Merkmale und Vorteile der Erfindung ergeben sich aus der nachfolgenden Beschreibung eines Ausführungsbeispiels unter Bezugnahme auf die zugehörige Zeichnung.

Es zeigen:
- Fig. 1: die Kabelvorbehandlung zur Montage eines Kabelendverschlusses nach dem Stand der Technik,
- Fig. 2: Aufbau einer Aufteilkappe nach dem Stand der Technik,
- Fig. 3: Vorderansicht des erfindungsgemäßen Aufbaus einer Mehrfinger-Aufteilkappe,
- Fig. 4: Vorderansicht der Mehrfinger-Aufteilkappe nach Fig. 3 mit umgestülpten Schaft,
- Fig.5: Schnittdarstellung der Aufteilkappe nach Fig. 4,
- Fig. 6: stirnseitige Draufsicht auf das Fingerteil der Aufteilkappe,
- Fig. 7: Gesamtansicht des Kabels mit in Endposition befindlicher Aufteilkappe nach erfolgter Montage.

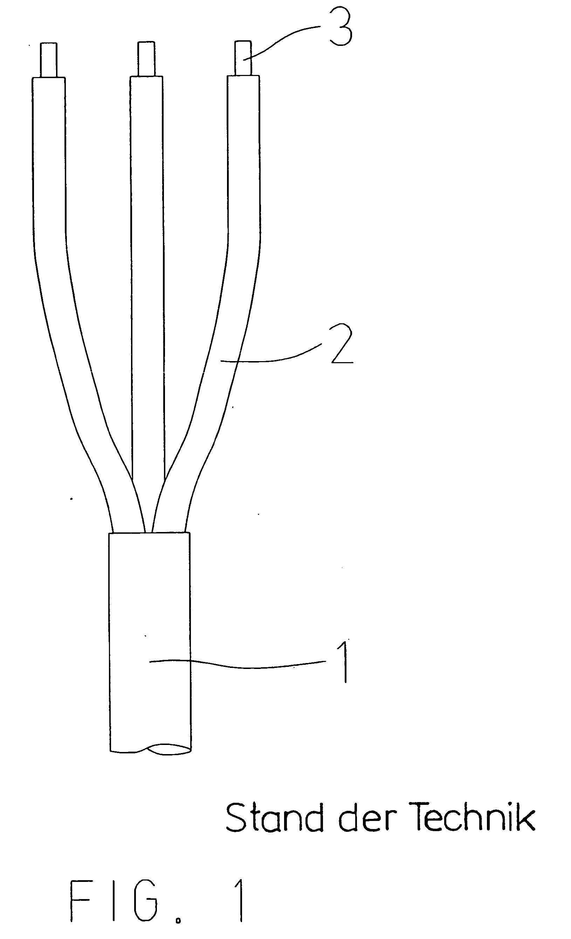

Fig. 1 zeigt ein zur Montage eines Kabelendverschlusses vorbereitetes dreiadriges Energiekabel mit dem gemeinsamen Kabelmantel 1 und den mit einer Isolierung 2 versehenen Adern 3.

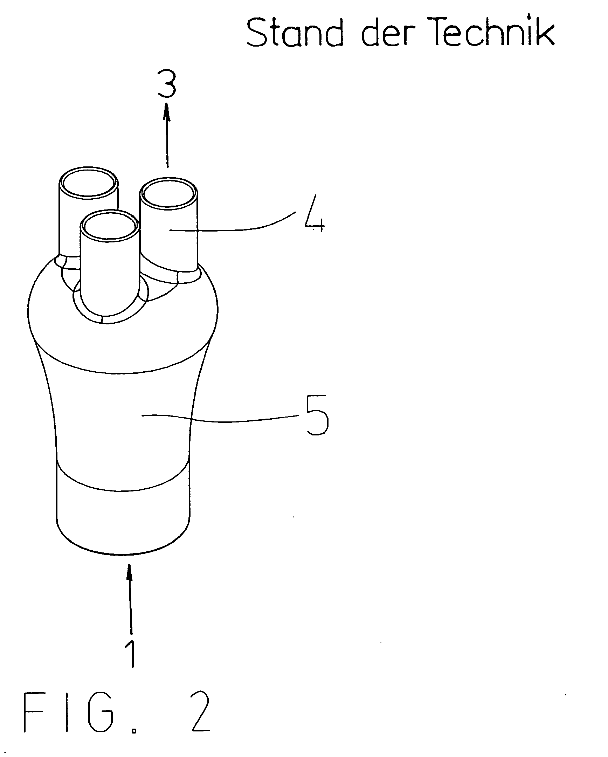

Die in Fig. 2 dargestellte Aufteilkappe nach dem Stand der Technik besteht aus dem zylindrischen Schaft 5, der den Kabelmantel 1 umhüllt, und den Fingern 4, die die einzelnen Adern 3 wasserdicht umschließen.

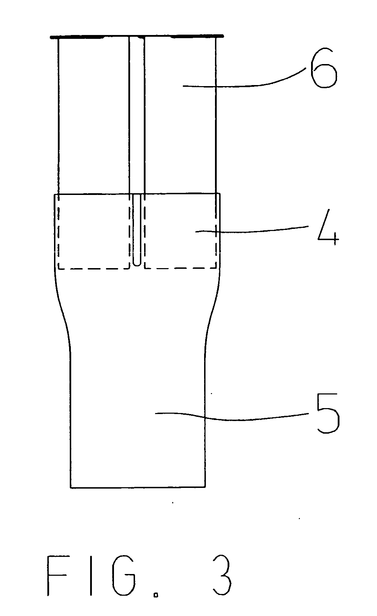

Fig. 3 veranschaulicht den Grundaufbau der neuen Mehrfinger-Aufteilkappe, bestehend aus Schaft 5 und Fingerteil 4. Im gedehnten Zustand der Finger 4 wurden herstellerseitig in die Finger 4 rohrförmige Stützhülsen 6 eingeschoben. Als Material für die Stützhülsen wird ein thermoplastischer Kunststoff, z.B. Polypropylen verwendet.

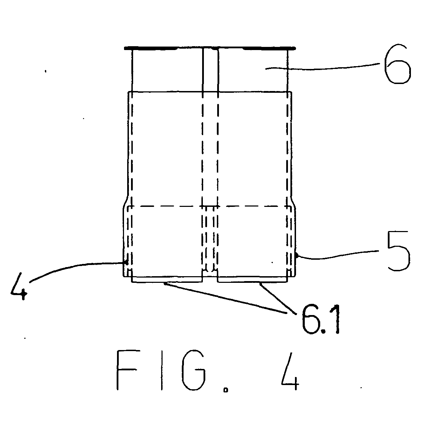

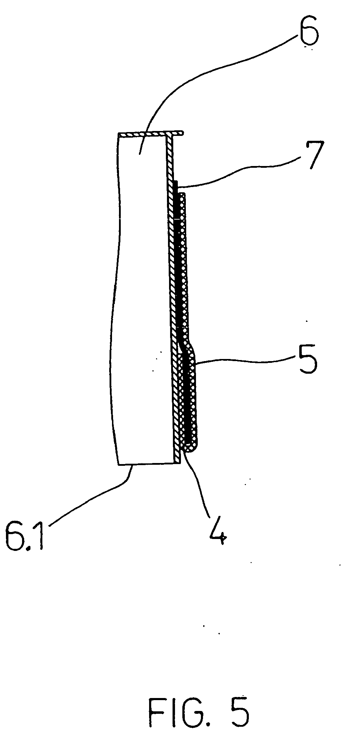

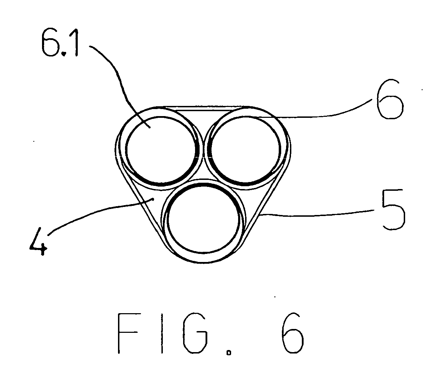

Fig. 4 und Fig. 5 zeigen in der Vorderansicht bzw. in einer Schnittdarstellung die erfindungsgemäße Aufteilkappe mit über das Fingerteil 4 und damit über die in die Finger eingesetzten Stützhülsen 6 gestülptem Schaft 5.
Durch diese bereits vom Hersteller durchgeführte Maßnahme des Zurückstülpens des Schaftes 5 in der Weise, dass er - unter Zwischenlage der Folie 7 - auf den durch die Stützhülsen 6 stabilisierten Fingern 4 und auf den Stützhülsen 6 selbst aufliegt, wird einmal der umgestülpte Schaft 5 vollständig durch das steife Fingerteil der Aufteilkappe abgestützt und zum anderen liegen dadurch die Öffnungen 6.1 der Stützhülsen 6 frei. Durch diese freiliegenden Öffnungen 6.1 wird das Einführen der Adern 3 besonders einfach, s. auch Fig. 6.

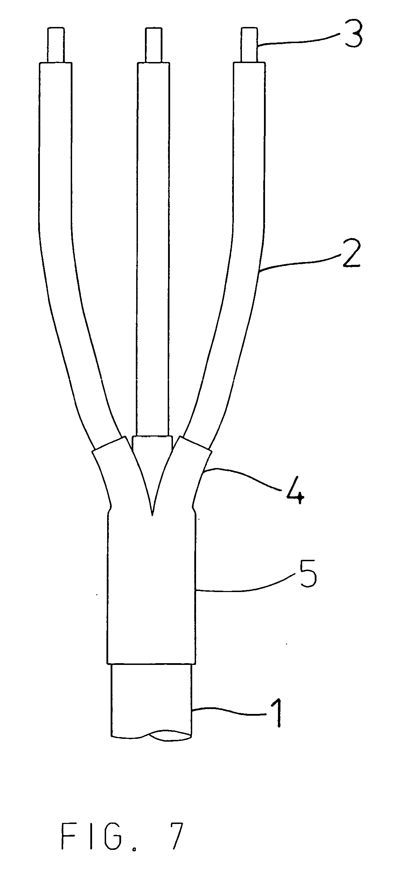

Fig. 7 zeigt die montierte Mehrfinger-Aufteilkappe in ihrer Endposition. Die rohrförmigen Stützhülsen 6 wurden bereits entfernt, so dass die Finger 4 die drei Andern 3 mit ihren Isolierungen 2 wasserdicht umschließen. Der ursprünglich umgestülpte Schaft 5 wurde bereits von Hand über den Kabelmantel 1 geschoben (zurückgestülpt). Die in zwei Lagen zwischen dem ursprünglich umgestülpten Schaft 5 und der Außenoberfläche des Fingerteils 4 eingebrachten Folien 7 erleichtern diesen Vorgang, s. Fig. 5.

### LISTE DER BEZUGSZEICHEN

- 1: Kabelmantel
- 2: Isolierung (der Adern)
- 3: Adern
- 4: Finger (der Aufteilkappe), Fingerteil
- 5: Schaft (der Aufteilkappe)
- 6: rohrförmige Stützhülsen
6.1 Öffnungen
- 7: Folie

## Patentansprüche

1. Dauerelastische Mehrfinger-Aufteilkappe für die Montage eines Kabelendverschlusses, wobei die Aufteilkappe aus einem zylindrischen Teil, dem Schaft (5) besteht, der im Einbauzustand das Ende des gemeinsamen Kabelmantels (1) umschließt, und an den Schaft (5) anschließend die Finger (4) angeordnet sind, die die einzelnen Adern (3) umhüllen, wobei im gedehnten Zustand eines jeden Fingers (4) der Aufteilkappe eine nur zur Ausführung der Montage benötigte rohrförmige Stützhülse (6) eingeführt ist, und der Schaft (5) der Aufteilkappe beim Hersteller über das durch die Stützhülsen (6) stabilisierte Fingerteil (4) der Aufteilkappe - die Öffnungen (6.1) der Stützhülsen (6) freigebend - gestülpt ist, so das der Schaft (5) dem Verlauf der Hüllkurve des von den Stützhülsen (6) im Fingerteil gebildeten Raumkörpers folgend auf den durch die Stützhülsen (6) gehaltenen Fingern (4) aufliegt und die Länge der Stützhülsen (6) so bemessen ist, dass der umgestülpte Schaft (5) vollständig durch das Bündel der drei oder mehr in die gleiche Anzahl von Fingern (4) eingeführten Stützhülsen (6) abgestützt ist und nach erfolgter Montage der umgestülpte Schaft (5) über den Kabelmantel (1) zu schieben ist und die Stützhülsen (6) aus den Fingern (4) zu entfernen sind.

2. Dauerelastische Mehrfinger-Aufteilkappe nach Anspruch 1,
**dadurch gekennzeichnet, dass** zwischen dem umgestülpten Schaft (5) und der Außenoberfläche der Finger (4) eine Folie (7) angeordnet ist.

3. Dauerelastische Mehrfinger-Aufteilkappe nach Anspruch 2,
**dadurch gekennzeichnet, dass** die Folie (7) in zwei Lagen aufgebracht ist.

4. Dauerelastische Mehrfinger-Aufteilkappe nach einem der Ansprüche 1 bis 3,
**dadurch gekennzeichnet, dass** die Innenoberfläche der Finger (4) mit einem langzeitbeständigen Gleitmittel versehen ist.

5. Dauerelastische Mehrfinger-Aufteilkappe nach einem der Ansprüche 1 bis 4,
**dadurch gekennzeichnet, dass** die Aufteilkappe mit ihren Teilen Schaft (5) und Finger (4) aus einem kriechstromfesten Silikon besteht und in Spritzgießtechnik ausgeführt ist.

6. Dauerelastische Mehrfinger-Aufteilkappe nach einem der Ansprüche 1 bis 5,
**dadurch gekennzeichnet, dass** als Material für die Stützhülsen (6) ein thermoplastischer Kunststoff, beispielsweise Polypropylen vorgesehen ist.

## Claims

1. Permanently elastic multi-finger divider sleeve for mounting a cable termination, whereby the divider sleeve consists of a cylindrical part, the body (5), which in mounted condition sheathes the end of the common cable sheath (1), and following the body (5) the fingers (4) are arranged, which sheathe the individual conductors (3), whereby in expanded condition of each finger (4) of the divider sleeve a tubular supporting sleeve (6) required for mounting only is inserted and the body (5) of the divider sleeve is folded back by the manufacturer over the finger part (4), which is stabilized by the supporting sleeve (6) - making the openings (6.1) of the supporting sleeve (6) freely accessible - so that the body (5) following the course of the envelope of the spatial body formed by the supporting sleeves (6) in the finger part bears on the fingers (4) held by the supporting sleeves (6) and the length of the supporting sleeve (6) is dimensioned such that the folded back body (5) is completely supported by the bundle of the three or more supporting sleeves (6) inserted in the same number of fingers (4), and after mounting has been carried out, the folded back body (5) is to be pushed over the cable sheath (1) and the supporting sleeves (6) to be removed out of the fingers (4).

2. Permanently elastic multi-finger divider sleeve to claim 1,
**characterized by** that between the folded back body (5) and the outer surface of the fingers (4) a film (7) is placed.

3. Permanently elastic multi-finger divider sleeve to claim 2,
**characterized by** that the film (7) is arranged to be in two layers.

4. Permanently elastic multi-finger divider sleeve to any of the claims 1 to 3,
**characterized by** that the inner surface of the fingers (4) is provided with a long-term resistant sliding agent.

5. Permanently elastic multi-finger divider sleeve to any of the claims 1 to 4,
**characterized by** that the divider sleeve with its parts body (5) and fingers (4) is made of a non-tracking silicone by injection moulding technology.

6. Permanently elastic multi-finger divider sleeve to any of the claims 1 to 5,
**characterized by** that as material for the supporting sleeves (6) a thermoplastic material such as polypropylene is provided.

## Revendications

1. Manchon séparateur multidoigt à élasticité permanente pour le montage d'une terminaison de câble, le manchon séparateur étant constitué d'une partie cylindrique, la tige (5), qui, à l'état monté, entoure l'extrémité de la gaine de câble commune (1), et les doigts (4) enveloppant les fils individuels (3) étant ensuite disposés sur la tige (5), une douille support (6) tubulaire ne servant que pour la réalisation du montage étant introduite dans chacun des doigts (4) du manchon séparateur à l'état étiré, et la tige (5) du manchon séparateur étant rabattue chez le fabricant sur la partie des doigts (4) du manchon séparateur stabilisée par les douilles support (6) - libérant les ouvertures (6.1) des douilles support (6) - de sorte que la tige (5), suivant la forme de l'enveloppante du volume formé par les douilles support (6) dans la partie des doigts (4), repose sur les doigts (4) tenus par les douilles support (6), et la longueur des douilles support (6) étant dimensionnée de sorte que la tige (5) rabattue est entièrement supportée par le paquet des trois douilles support (6), ou plus, introduites dans le même nombre de doigts (4) et en ce que, après le montage, la tige (5) rabattue doit être repoussée sur la gaine (1) du câble et que les douilles support (6) doivent être retirées des doigts (4).

2. Manchon séparateur multidoigt à élasticité permanente selon la revendication 1,
**caractérisé en ce qu'**un film (7) est disposé entre la tige (5) rabattue et la surface extérieure des doigts (4) .

3. Manchon séparateur multidoigt à élasticité permanente selon la revendication 2,
**caractérisé en ce que** le film (7) est appliqué en deux couches.

4. Manchon séparateur multidoigt à élasticité permanente selon l'une des revendications 1 à 3,
**caractérisé en ce que** la surface intérieure des doigts (4) est pourvue d'un agent antifriction à longue tenue dans le temps.

5. Manchon séparateur multidoigt à élasticité permanente selon l'une des revendications 1 à 4,
**caractérisé en ce que** le manchon séparateur, avec ses parties tige (5) et doigts (4) est réalisée en un silicone résistant aux courants de fuite selon la technique du moulage par injection.

6. Manchon séparateur multidoigt à élasticité permanente selon l'une des revendications 1 à 5,
**caractérisé en ce qu'**il est prévu, en tant que matière pour les douilles support (6), une matière synthétique thermoplastique, par exemple du polypropylène.
